# EUROPEAN PATENT APPLICATION

(11) **EP 3 506 076 A1**
(43) Date of publication of application: **03.07.2019**
(21) Application number: 17210812.8
(22) Date of filing: 28.12.2017
(51) Int. Cl.: G06F 3/14, G09G 3/20

(54) **ACTIVE VIDEOWALL POSITIONING**

(71) Applicant: Vestel Elektronik Sanayi ve Ticaret A.S., 45030 Manisa (TR)
(72) Inventor: KARA, Eren, 45030 Manisa (TR)
(74) Representative: Beck Greener LLP

(57) **Abstract**

The invention relates to a multi-screen display apparatus comprising a plurality of display devices in an array, wherein each display device comprises a screen and a camera, at least one connector to allow the display devices to communicate with each other, at least one controller configured to control each camera in said plurality of display devices to take an orientation image, and at least one image processor configured to process said orientation images to identify the position of each screen in the array of display devices, a method of identifying the position of the screens in the display apparatus, a method of displaying a display image using the display apparatus and a method of setting up a multi-screen display.

## Description

### FIELD

The present invention relates to a multi-screen display apparatus and a method of displaying images on a multi-screen display.

### BACKGROUND

It is known to display large video display images or display pictures by using a plurality of smaller screens for a variety of reasons, including advertising, exhibitions and sports events. One common problem is to ensure that the large image shows a coherent picture so that the display images on screens do not overlap, the display images are run together when there are gaps between the screens and do not show gaps in the display images when the screens are adjacent. Another problem is to know the general relative positions of the screens.

The relative positioning of screens can be input manually and adjusted to create an appropriate image. This method relies on direct input from the user to ensure that the final multi-screen image is correctly shown.

In US2016/0139867, a method is used in which an image is captured of the screen using a camera, with a controller being used to control the images on each screen to establish the relative positions of each screen and adjust the multi-screen image accordingly.

The methods currently known in the field are therefore time-consuming and it is difficult to ensure a good display image is produced. Known methods are not sufficiently accurate or require the use of additional equipment that needs to be carefully arranged each time the multi-screen display is set up.

### SUMMARY OF INVENTION

In a first aspect of the present invention, there is provided a multi-screen display apparatus comprising:
(i) a plurality of display devices in an array, wherein each display device comprises:
   a screen; and
   a camera;
(ii) at least one connector to allow the display devices to communicate with each other;
(iii) at least one controller configured to control each camera in said plurality of display devices to take an orientation image; and
(iv) at least one image processor configured to process said orientation images to identify the position of each screen in the array of display devices.

A multi-screen display is provided capable of identifying the relative position of the individual screens and producing a clear display image across multiple screens quickly and efficiently.

Each display device is formed of a screen and a camera. In standard display devices, the screen is commonly surrounded by a frame or bezel to support the structure of the screen. As the display devices are used to produce a multi-screen display for displaying images, it is preferred that the bezel is as narrow as possible in order to maximise the total screen area and avoid blank spots. In one preferred embodiment, a display device does not have a bezel and the screen extends to the edge of the display device.

The display device has a camera. The camera is typically situated in the bezel of the display device. However, where the display device does not have a bezel, it is possible to locate the camera elsewhere, such as behind the screen, as described in US2007/0002130.

In order to identify the relative position of a screen, it is advantageous that for each display device, the camera is located in a known position relative to said screen. Whilst it is possible to estimate the position of a screen based on the knowledge that the camera is positioned in the bezel of the screen or behind the screen, it is more accurate to identify the position of the screen when the exact position of the camera is known.

It is further preferred, in order to simplify the information processing, that each display device in the array has a camera located in the same position on the bezel relative to said screen. In a particularly preferred embodiment, the camera is located on the top bar of the bezel directly above the centre of the screen i.e. at the top of the display device.

In order for the display devices to communicate with one another, it is essential that there is at least one connector which connects between the display devices in an array. The skilled person would be aware of different methods to connect the display devices together to permit communication. The connector is typically a physical connector which connects at least two display devices together. One preferred method is to connect the display devices in a daisy chain method, in which each display device in the array is connected in series.

The skilled person would be aware of a suitable connectors which would be suitable to connect the display devices in an array. In one preferred embodiment, the connector is at least one universal asynchronous receiver-transmitter (UART). This type of connector is particularly suited to connection in a daisy chain method.

The apparatus has a controller which is configured to control each camera. It is preferred that the controller is configured to control each said camera to take the orientation image simultaneously. By taking the orientation images at the same time, the risk of objects moving between the taking of multiple images is removed. However, it is to be appreciated that the apparatus will still function if the orientation images are taken sequentially.

It is preferred that each image is taken at the same resolution to ensure that each of the images is equivalent. It is further preferred that the camera on each screen is identical.

In one embodiment, the multi-screen display apparatus has a single image processor which processes all of the images. However, in a preferred embodiment, the apparatus has a plurality of image processors. It is particularly preferred that each display device has its own image processor to process the orientation image taken by its own camera.

In a preferred embodiment, a first image processor, identifies a point or feature on an orientation image. The identified point is one with sufficient resolution to allow it to be identified on all orientation images. Where there is more than one image processor, the information relating to the identified point is sent to each image processor to allow that point to be identified on the orientation image or images. The relative position of each screen can then be calculated based on the position of the identified point on the orientation image associated with that screen. It is preferred that the first image processor is associated with a first display device. This first display device can be considered to be the master display device. In a preferred embodiment, the controller is also part of the master display device.

It is further preferred that each display device has a controller and can act as the master display device, such that any array of display devices can be used.

In one embodiment, the apparatus additionally comprises display means for displaying a display image or images based on the identified position of said screens. Once the relative position of each screen has been identified, the display means display the display image or images on the multi-screen display such that the display image is shown correctly.

In a second aspect, there is provided a method of identifying the position of display devices in the multi-screen display of the first aspect comprising the steps of:
taking an orientation image with each said camera;
processing each said orientation image;
identifying a common point on each said orientation image;
using said common point to identify the position of each screen.

It is preferred that each said orientation image is taken simultaneously.

In a preferred embodiment, a first controller on a first or master display device sends a command to all of the display devices in the array to take the orientation images, preferably simultaneously.

It is further preferred that the first image processor on the first or master display device identifies a point or feature on the orientation image which is common to each orientation image. The identified common point is then identified on each orientation image. In a preferred embodiment, each display device has its own image processor. The identified point is communicated to each display device and identified by the image processor of that display device on its orientation image.

The relative position of the identified point on the orientation image is then used to identify the relative position of the display device.

In a preferred embodiment, more than one common point can be identified on the orientation images. Where more than one common point is identified, each common point can be used to identify the relative positions of the display devices more accurately.

In a third aspect, there is provided a method of displaying a display image or images on a multi-screen display apparatus undertaking the method of the second aspect, wherein the method additionally comprises using the identified position of each screen to display the said display image or images using display means.

Once the relative positions of the screens has been identified, it is possible to display the image or images across all of the screens of the multi-screen display such that the display is shown correctly.

In a further aspect of the invention, there is provided a method of setting up a multi-screen display of the first aspect of the invention comprising:
arranging a plurality of display devices in an array;
connecting the display devices using at least one UART in a daisy chain method;
taking an orientation image with each camera; and
identifying the relative position of each screen in the array.

All features described in connection with any aspect of the invention can be used with any other aspect of the invention.

### BRIEF DESCRIPTION OF FIGURES

Embodiments and examples of the invention will be further described with reference to the drawings in which:
Figure 1 shows a multi-screen display according to an exemplary embodiment of the present invention;
Figure 2 shows a flow chart of the orientation process.
Figure 3 shows a multi-screen display after set-up.

### DETAILED DESCRIPTION

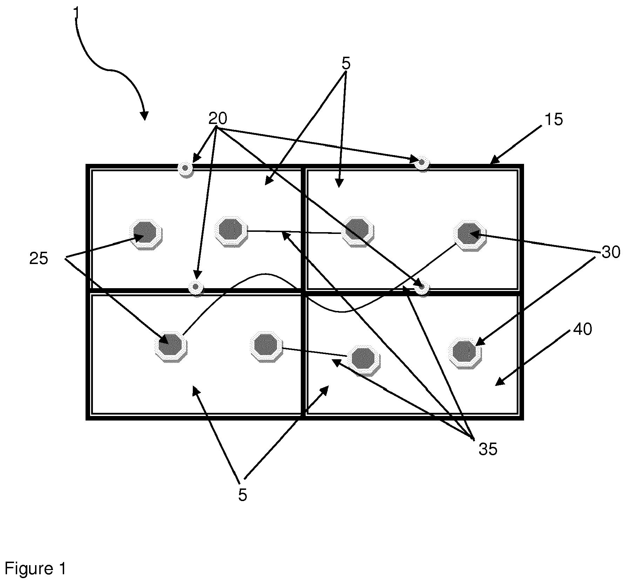

The invention relates to a multi-screen display apparatus. In Figure 1, there is disclosed a multi-screen display apparatus 1, which is formed of four display devices 5 in an array. Each display device has a screen 10, a bevel 15 and a camera 20, positioned in the middle of the top bar of the bevel.

On the rear of each display device 5 is a first UART port, UART0 25 and a second UART port, UART1 30. The ports are connected to each other in a daisy chain manner using UART cables 35.

Each display device has an image processor and a controller (not shown).

When setting up the multi-screen display apparatus 1, the display devices 5 are attached to a support structure (not shown). The support structure can be a wall or a framework designed for receiving the display devices. The skilled person will be aware of suitable support structures.

The display devices are connected to each other using the UART cables which pass from the UART0 port of one screen to the UART1 port of an adjacent screen. The first display device in the daisy chain is identified as the master display device, shown as 40.

Each display device will typically have its own power supply (not shown). However, it is possible to connect the display devices together to use a single power supply.

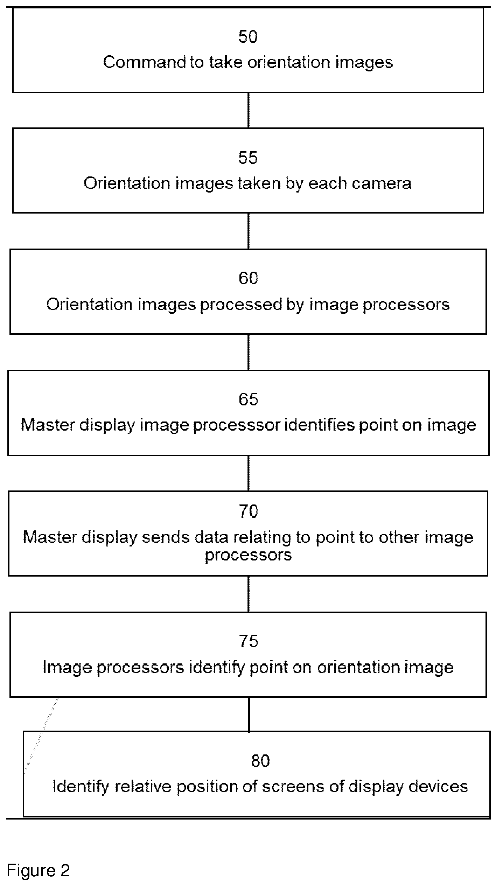

Once the display devices are turned on, the orientation of the display devices can be determined. The orientation is according to the flow chart of Figure 2. A command 50 is sent by the master display device 40 to all of the cameras in the array to take an orientation image simultaneously. An orientation image is then taken 55 by each camera. Each image taken has the same resolution.

The image taken by each camera is then processed 60 by the image processor of the same display device.

The image processor of the master display device processes its image at the same time as the other image processors 60 and additionally identifies 65 a point on the image which is clearly identifiable and has good resolution. The master display then sends data 70 relating to the point to the other image processors in the array. The other image processors identify the position of the point on the orientation image 75.

The position of the point on the orientation image is then used to identify the relative position of each screen of the display devices 80, based on the relative position of the point on the orientation images.

Once the relative positions of the screens have been identified, the multi-screen display apparatus is ready for use. The display image or images are fed to the multi-screen display apparatus. Display means (not shown) are then used to display the display image across the multiple screens to ensure that the image is correctly shown such that there are no gaps in the image and no overlaps in the image.

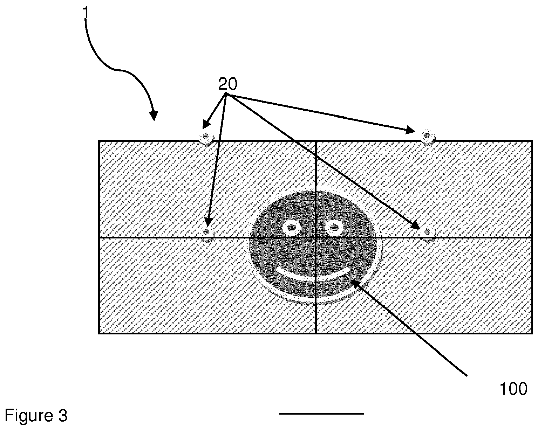

Figure 3 shows a display image 100 being shown on the multi-screen display apparatus once the apparatus has been set up for use.

Whilst the invention has been described with reference to a preferred embodiment, it will be appreciated that various modifications are possible within the scope of the invention.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. A multi-screen display apparatus comprising:
(i) a plurality of display devices in an array, wherein each display device comprises:
a screen; and
a camera;
(ii) at least one connector to allow the display devices to communicate with each other;
(iii) at least one controller configured to control each camera in said plurality of display devices to take an orientation image; and
(iv) at least one image processor configured to process said orientation images to identify the position of each screen in the array of display devices.

2. A multi-screen display apparatus as claimed in Claim 1, additionally comprising display means for displaying a display image or images based on the identified position of said screens.

3. A multi-screen display apparatus as claimed in Claim 1 or Claim 2, wherein for each display device, said camera is located in a known position relative to said screen.

4. A multi-screen display apparatus as claimed in Claim 3, wherein for each display device in the array, said camera is located in the same position relative to said screen.

5. A multi-screen display apparatus as claimed in Claim 4, wherein for each display device in the array, said camera is located at the edge of the screen directly above the centre of the screen.

6. A multi-screen display apparatus as claimed in any one of Claims 1 to 5, wherein the at least one connector is at least one universal asynchronous receiver-transmitter (UART).

7. A multi-screen display apparatus as claimed in any one of Claims 1 to 6, wherein the connectors connect the displays in a daisy chain method.

8. A multi-screen display apparatus as claimed in any one of Claims 1 to 7, wherein each display device has an image processor to process the orientation image taken by its camera.

9. A multi-screen display apparatus as claimed in any one of Claims 1 to 8, wherein said at least one controller is configured to control each said camera to take said orientation image simultaneously.

10. A method of identifying the position of screens of display devices in the multi-screen apparatus of any one of Claims 1 to 9, comprising the steps of:
taking an orientation image with each said camera;
processing each said orientation image;
identifying a common point on each said orientation image;
using said common point to identify the position of each screen of a display device.

11. A method as claimed in Claim 10, wherein each said orientation image is taken simultaneously.

12. A method as claimed in Claim 10 or Claim 11, wherein a first controller on a first display device sends a command to all display devices to take said orientation images.

13. A method as claimed in any one of Claims 10 to 12, wherein a first image processor on a first display device identifies said common point and communicates said common point to the other display devices.

14. A method of displaying a display image or images on a multi-screen display apparatus comprising:
undertaking the method of any one of Claims 10 to 13;
using the identified position of each screen to display the said display image or images using display means.

15. A method of setting up a multi-screen display according to any one of Claims 1 to 9 comprising:
arranging a plurality of display devices in an array;
connecting the display devices using at least one UART in a daisy chain method;
taking an orientation image with each camera; and
identifying the relative position of each screen in the array.
